**Europäisches Patentamt**

(19) **European Patent Office**

**Office européen des brevets**

(11) Numéro de publication: **0 187 568**
**B1**

# (12) FASCICULE DE BREVET EUROPEEN

(45) Date de publication du fascicule du brevet:
**14.06.89**

(21) Numéro de dépôt: 85402364.5

(22) Date de dépôt: **02.12.85**

(51) Int. Cl.⁴: **C 08 G 18/78, C 08 G 18/79,**
**C 08 G 18/48, B 32 B 17/10,**
**C 03 C 17/32, C 08 J 7/04**

(54) Couche de revêtement transparente ayant des propriétés d'autocicatrisation et de resistance à la buée utilisable dans des vitrages.

(30) Priorité: **06.12.84 FR 8418602**

(43) Date de publication de la demande:
**16.07.86 Bulletin 86/29**

(45) Mention de la délivrance du brevet:
**14.06.89 Bulletin 89/24**

(84) Etats contractants désignés:
**BE DE FR GB IT**

(56) Documents cités:
**FR-A- 2 115 452**
**FR-A- 2 320 563**
**US-A- 3 655 432**

(73) Titulaire: **SAINT-GOBAIN VITRAGE, Les
Miroirs 18, avenue d'Alsace, F-92400 Courbevoie (FR)**
(84) Etats contractants désignés: **BE FR GB IT**

(73) Titulaire: **VEGLA VEREINIGTE GLASWERKE,
Viktoriaallee 3-5, D-5100 Aachen (DE)**
(84) Etats contractants désignés: **DE**

(72) Inventeur: **Holzer, Gerhard, Dr., Dr.
Josef-Lamby-Strasse 2, D-5100 Aachen (DE)**
Inventeur: **Raedisch, Helmer, Dr., Nizzaallee 36,
D-5100 Aachen (DE)**
Inventeur: **Breuer, Kornelia, Fritz-Erler-Ring 34,
D-5173 Aldenhoven (DE)**
Inventeur: **Gelderie, Udo, An der Waldmeisterhütte 34,
D-5190 Stolberg (DE)**

(74) Mandataire: **Muller, René et al, SAINT-GOBAIN
RECHERCHE 39, quai Lucien Lefranc,
F-93304 Aubervilliers (FR)**

EP 0 187 568 B1

ACTORUM AG

## Description

La présente invention concerne une couche de revêtement en polyuréthane de haute qualité optique transparent ayant des propriétés d'autocicatrisation pour des vitrages en verre et/ou en matière plastique, cette couche étant préparée à partir d'un mélange réactionnel contenant un composant isocyanate plurifonctionnel et en particulier trifonctionnel et un composant polyol plurifonctionnel, ainsi qu'éventuellement un catalyseur de réaction et d'autres substances auxiliaires.

Lorsque des couches de revêtement de ce genre sont appliquées sur des vitrages en verre de silicate, elles servent de couches antiéclats en cas d'une rupture du vitrage en empêchant le contact avec les bords aigus des fragments de verre. Les vitrages portant de telles couches de revêtement conviennent particulièrement comme vitrage de sécurité pour les véhicules automobiles et sont décrits notamment dans les publications de brevets français 2 187 719 et 2 251 608.

Des couches du genre indiqué sont également connues d'après les publications de brevet allemand 2 058 504, 2 634 816, 3 201 849 en tant que couches de revêtement pour des matières plastique transparentes. Dans cette application, ces couches de polyuréthane servent à améliorer la résistance à la rayure et à l'abrasion de la matière plastique. Ces couches de polyuréthane molle citées ci-dessus ont en effet la propriété d'être autocicatrisable c'est à dire que ce sont des couches desquelles les déformations superficielles disparaissent spontanément après un cours laps de temps, la durée de disparition dépendant généralement de la température.

Ces couches de revêtement connues en polyuréthane transparent peuvent être appliquées suivant différents procédés sur le substrat. Ainsi, il est connu de fabriquer d'abord des feuilles de cette matière et d'appliquer ces feuilles sur le substrat avec interposition d'une couche de colle thermoplastique comme il est décrit par exemple dans la publication de brevet français 2 398 606. Il est connu aussi de couler ou de pulvériser sur le substrat à revêtir le mélange réactionnel formant le polyuréthane, après avoir éventuellement appliqué un agent d'adhérence au préalable sur le substrat.

Les couches de revêtement citées ci-dessus ont des propriétés remarquables pour ce qui est de leur résistance à l'abrasion et à la rayure, de leur transparence et de leurs autres propriétés d'usage. Cependant lorsqu'elles sont placées dans des condition de forte humidité, il peut se former, par condensation de l'humidité atmosphérique sur leur surface, un dépôt de très fines gouttelettes d'eau pouvant nuire à la vision à travers le vitrage ou la feuille.

L'invention a pour but de modifier les couches de revêtement en polyuréthane hautement élastique ayant des propriétés d'autocicatrisation du genre décrit ci-dessus de façon à entraver ou atténuer durablement la formation d'une condensation d'humidité gênante à leur surface, autrement dit de retarder notablement l'apparition de l'embuage tout en conservant leurs bonnes propriétés mécaniques, optiques et d'usage général.

Conformément à l'invention, on atteint ce but en utilisant pour la préparation de la couche de revêtement, un mélange réactionnel comprenant 10 à 75% en poids d'un biuret ou d'un isocyanurate du 1, 6-hexaméthylènediisocyanate, comprenant 15 à 25% en poids de radicaux NCO et ayant un poids moléculaire moyen compris entre 450 et 850, et 90 à 25% en poids d'un composant polyol comprenant essentiellement un polyol plurifonctionnel comprenant 0,4 à 17% en poid de radicaux OH et ayant un poids moléculaire moyen compris entre 200 et 15 000, et présentant des chaînes éthoxy-propoxy comprenant 50 à 90% en poids de radicaux éthoxy et 50 à 10% en poids de radicaux propoxy, et éventuellement un catalyseur de réaction et d'autres substances auxiliaires.

Conformément à l'invention, on modifie donc la composition chimique de la couche de revêtement en polyuréthane autocicatrisable de manière qu'elle acquière des propriétés hydrophiles et soit à même d'absorber la vapeur d'eau en surface sans que les propriétés physicomécaniques requises soient pour autant modifiées de façon inadmissible.

Une autre amélioration dans le sens d'une optimisation des propriétés tant mécaniques qu'hydrophiles peut être obtenue par l'utilisation de polyols plurifonctionnels dans lesquels les radicaux éthoxy et propoxy dans les chaînes éthoxy-propoxy se trouvent en répartition statistique.

Le polyol plurifonctionnel présentant des chaînes éthoxypropoxy utilisé selon l'invention peut être un polyol difonctionnel comprenant 5 à 17% en poids de radicaux OH, de poids moléculaire moyen compris entre 200 et 600 et comprenant 80% en poids de radicaux éthoxy dans la chaîne éthoxy-propoxy. Ce polyol difonctionnel entre dans le mélange polyol-isocyanate à raison de 25 à 70% en poids dudit mélange. Le polyol plurifonctionnel peut aussi être un polyol de fonctionnalité supérieure à 2 comprenant 0,4 à 14% en poids de radicaux OH, de poids moléculaire moyen compris entre 500 et 15 000 et comprenant 50 à 90% en poids de radicaux éthoxy dans les chaînes éthoxy-propoxy. Ce polyol entre dans le mélange polyol-isocyanate à raison de 30 à 90% en poids dudit mélange.

Le polyol trifonctionnel est de préférence un polyétherpolyol à base de triméthylolpropane ou de glycérol et d'oxyde de propylène, ou un lactonepolyesterpolyol à base de triméthylolpropane ou de glycérol et d'ε)-caprolactone.

Le polyol polyfonctionnel peut encore être un polyol tétrafonctionnel comprenant 0,7 à 14% en poids de radicaux OH, de poids moléculaire moyen compris entre 500 et 10 000 et comprenant 10 à 80% en poids de radicaux éthoxy dans les chaînes éthoxypropoxy.

Pour l'évaluation des propriétés physico-mécaniques des couches de revêtement en polyuréthane autocicatrisables, on détermine comme grandeurs représentatives le module E, la résistance à l'abrasion et la résistance à la rayure qui, dans leur ensemble, permettent de prévoir si la couche de revêtement présente les propriétés d'autocicatrisation requises et le comportement d'usage nécessaire. Le module E est à cet effet déterminé suivant le procédé décrit dans la norme DIN 53 457. Pour la détermination de la résistance à l'abraison, on applique le procédé décrit dans la norme ECE R-43, suivant lequel deux cylindres abrasifs entrent en interaction sous une sollicitation de 500 g avec l'éprouvette en rotation pendant 100 tours. Pour l'évaluation de l'abrasion résultant de cette sollicitation, on mesure ensuite suivant le procédé également décrit dans la norme ECE R-43, l'augmentation de la turbidité indiquée en % par comparaison avec la turbidité initiale avant la manipulation.

Le mélange réactionnel utilisé selon l'invention pour fabriquer la couche de revêtement, peut contenir jusqu'à 15% en poids d'additifs tels des agents d'étalement, des solvants organiques, des agents de protection contre la lumière, des agents anti-UV. En tant qu'agent d'étalement on peut citer des esters fluoroalkylés, des oxyalkylènepolysiloxanes. En tant que solvant organique on peut citer le toluène, le xylène, l'acétate d'éthyle et/ou l'acétate d'éthylèneglycol. En tant qu'agent de protection contre la lumière on peut citer les amines à empêchement stérique en tant qu'agent anti-UV. On peut citer les benzotriazoles substitués etc... Ces additifs sont généralement placés dans le composant polyol et leurs proportions en poids sont généralement comptés par rapport au poids du polyol.

La résistance à la rayure est déterminée suivant le procédé d'Erichsen, pour lequel on utilise un montage expérimental tel qu'il est décrit dans la norme DIN 53 799, sauf que le diamant conique de rayage utilisé présente un angle conique de 50 degrés et un rayon de courbure de 15 μm au sommet du cône. Pour l'évaluation de la résistance à la rayure, on indique le poids de sollicitation le plus élevé du diamant de rayage pour lequel aucune lésion visible permanente de la surface n'est identifiable.

Par expérience, on sait que les couches de revêtement autocicatrisables en polyuréthane transparent peuvent être utilisées comme couches anti-éclats lorsque le module E de ces couches est compris entre 2 et 20 N/mm², l'augmentation de turbidité par abrasion suivant ECE R-43 est inférieure à 4% et la résistance à la rayure suivant Erichsen est supérieure à 10 p. De même, les couches de revêtement hydrophiles ne conviennent pour un usage durable pratique que lorsque les propriétés indiquées se situent à l'intérieur de ces limites.

Pour l'évaluation de l'effet anticondensation on applique un procédé tel qu'il est décrit dans la norme DIN 4648, partie 8, sauf que la température de l'eau est réglée à 40 °C par voie thermostatique. On prend comme mesure du comportement à la condensation, la durée qui s'écoule jusqu'à ce qu'un début de condensation sur l'éprouvette soit perceptible à l'œil nu (délai d'apparition de l'embuage). Avec les couches de revêtement en polyuréthane autocicatrisables connues jusqu'à présent, un début de condensation est perceptible immédiatement après l'introduction de l'éprouvette dans l'appareil de mesure.

La couche selon l'invention est généralement formée par coulée du mélange réactionnel comme décrit par exemple dans les publications de brevets européens 0 132 198 et 0 133 090.

Elle peut aussi être formée par pulvérisation du mélange réactionnel ou encore par une injection réactive dans un moule. La couche peut être formée in situ sur le vitrage à recouvrir. Elle peut être formée sur un support de formation duquel elle est ensutie retirée après avoir éventuellement été associée à une ou plusieurs autres couches de matières plastiques. La feuille obtenue est assemblée ensuite au substrat pour constituer le vitrage désiré.

Par couche, on entend selon l'invention aussi bien la couche sur un substrat que sous forme d'une feuille indépendante à une ou plusieurs couches.

D'autres caractéristiques et avantages de l'invention apparaitront dans la description suivante d'exemples de réalisation de couches de revêtement selon l'invention.

Exemple 1

Dans cet exemple, on prépare un mélange réactionnel utilisant un polyol difonctionnel. A cette fin, on fait réagir 100 g d'un polyisocyanate essentiellement trifonctionnel à savoir un biuret de 1,6-hexaméthylène-diisocyanate ayant une teneur en radicaux NCO libres de 23%, avec 164 g d'un polyol à base d'éthylèneglycol et d'oxyde d'éthylène/oxyde de propylène (rapport pondéral 60/40, répartition statistique) ayant une teneur en radicaux OH libres de 5,7% et un poids moléculaire moyen d'environ 600 g par mole. Comme additifs, on ajoute au polyol 0,07 g de dilaurate de dibutylétain comme catalyseur et 2,9 g d'oxyalkylènepolysiloxane comme agent d'étalement.

On agite le mélange à la température ambiante pendant 10 minutes. On coule le mélange réactionnel ainsi homogénéisé pour former une couche de 0,5 mm d'épaisseur sur des plaques de verre chauffées à environ 60 °C. On exécute la réaction de durcissement en 30 minutes à 90 °C.

Après 48 heures de conservation à 20 °C dans une humidité relative de 50%, on détache les feuilles et on mesure leurs propriétés, ce qui donne les valeurs suivantes:

| | |
|---|---|
| – Module E | $5 \pm 1$ N/mm² |
| – Augmentaion de turbidité après abrasion | 1,2% |
| – Résistance à la rayure | 20 p |
| – Délai d'apparition de l'embuage | environ 3 min |

Les propriétés mécaniques de cette couche de revêtement tombent donc entre les limites exigées, tandis que le comportement à la condensation est très sensiblement amélioré.

Exemple 2

On utilise pour la préparation du mélange réactionnel, un polyol plurifonctionnel formé à partir du composé hydroxylé tétrafonctionnel qu'est le pentaérythritol. A cette fin, on procède de la façon suivant: on fait réagir 100 g d'un polyisocyanate essentiellement trifonctionnel, à savoir un isocyanurate à base d'hexaméthylènediisocyanate ayant une teneur en radicaux NCO libres de 21,5%, avec 93 g d'un polyol à base de pentaérythritol et d'oxyde d'éthylène/oxyde de propylène (rapport pondéral 80/20 et répartition statistique) ayant une teneur en radicaux OH libres de 1,4% et un poids moléculaire moyen d'environ 5 000 g/mole. Comme additifs, on incorpore au polyol 0,01 g de dilaurate de dibutylétain comme catalyseur, 1 g d'oxyalkylènepolysiloxane comme agent d'étalement et 10 g d'acétate d'éthyle comme solvant.

On agite le mélange à la température ambiante pendant 10 minutes. On coule le mélange réactionnel ainsi homogénéisé pour former une couche d'environ 0,5 mm d'épaisseur sur des plaques de verre qu'on a chauffées au préalable à environ 60 °C. On conduit la réaction de durcissement ultérieure pendant 30 minutes à 90 °C.

On conserve les échantillons ainsi préparés pendant 48 heures à 20 °C et dans une humidité relative de 50%. On détache ensuite les couches de couverture des vitres de verre et on détermine leurs propriétés suivant les procédés indiqués. On obtient ainsi les valeurs de mesure suivantes:

| | |
|---|---|
| – Module E | $11 \pm 1$ N/mm$^2$ |
| – Augmentation de turbidité après abrasion | 1,5% |
| – Résistance à la rayure | 27 p |
| – Délai d'apparition de l'embuage | environ 10 min |

Pour cette couche de couverture également, les propriétés mécaniques tombent entre les valeurs limites exigées et le comportement à la condensation est aussi sensiblement améliorée.

Exemple 3

On prépare un mélange réactionnel, dans lequel on utilise comme composant polyol, un polyol plurifonctionnel formé à partir du composé hydroxylé trifonctionnel qu'est le triméthylolpropane. A cette fin, on fait réagir 100 g d'un polyisocyanate essentiellement trifonctionnel à savoir un biuret de 1,6-hexaméthylènediisocyanate ayant une teneur en radicaux NCO libres de 23% en poids, avec 100 g d'un polyol à base de triméthylolpropane et d'oxyde d'éthylène/oxyde de propylène (rapport 80/20, répartition statistique) ayant une teneur en radicaux OH libres de 1,4% et un poids moléculaire moyen d'environ 3 800 g/mole. Comme additifs, on ajoute au polyol 0,01 g de dilaurate de dibutylétain comme catalyseur et 1 g d'oxyalkylènepolysiloxane.

On agite le mélange à la température ambiante pendant 10 minutes. On coule le mélange réactionnel ainsi homogénéisé pour former une couche d'environ 0,5 mm d'épaisseur sur des plaques de verre qu'on a au préalable chauffées à environ 60%. On durcit les couches à nouveau à une température de 90 °C pendant 30 minutes.

On conserve les échantillons ainsi préparés à nouveau pendant 48 heures à 20 °C et dans une humidité relative de 50%. On détermine ensuite les propriétés des couches de couverture, les valeurs de mesure obtenues étant les suivantes:

| | |
|---|---|
| – Module E | $10 \pm 1$ N/mm$^2$ |
| – Augmentation de turbidité après abrasion | 1,3% |
| – Résistance à la rayure | 28 p |
| – Délai d'apparition de l'embuage | environ 25 min |

Dans ce cas également, les propriétés mécaniques tombent entre les limites indiquées, tandis que le comportement à la condensation prend également une valeur exceptionnellement favorable.

Exemple 4

On prépare un mélange réactionnel, dans lequel on utilise comme composant polyol, un polyol tétrafonctionnel formé à partir d'éthylènediamine. A cette fin, on fait réagir 100 g d'un polyisocyanate essentiellement trifonctionnel, à savoir un biuret de 1,6-hexaméthylènediisocyanate ayant un teneur en radicaux NCO libres de 23% en poids, avec 138 g d'un polyol à base d'éthylènediamine et d'oxyde d'éthylène/oxyde de propylène (rapport pondéral 80/20, répartition en séquences) ayant une teneur en radicaux OH libres de 6,8% et un poids moléculaire moyen d'environ 1 000 g par mole, en solution dans 100 ml de toluène comme solvant. Comme additifs, on ajoute au polyol 0,05 g de dilaurate de dibutylétain comme catalyseur et 0,1 g d'un ester alcolylique fluoré comme agent d'étalement.

On agite le mélange à la température ambiante pendant 10 minutes. On convertit le mélange de réaction ainsi homogénéisé de la même façon que dans les exemples décrits ci-dessus en feuilles durcies sur lesquelles on exécute les mesures indiquées. Les valeurs de mesure ainsi obtenues sont les suivantes:

| | |
|---|---|
| – Module 3 | $11 \pm 2$ N/mm$^2$ |
| – Augmentation de turbidité après abrasion | 0,75% |
| – Résistance à la rayure | 18 p |
| – Délai d'apparition de l'embuage | environ 10 min |

Cette couche de revêtement présente les propriétés requises pour pouvoir être utilisée dans les vitrages.

Exemple 5

On prépare un mélange réactionnel dans lequel on utilise entre autre un polyétherpolyol trifonctionnel à base de triméthylolpropane et d'oxyde de proylène. A cette fin, on fait réagir 100 g d'un polyisocyanate essentiellement trifonctionnel, à savoir un biuret de 1,6-hexaméthylènediisocyanate ayant une teneur en radicaux NCO libres de 23% en poids, avec 134 g d'un polyol à base de pentaérythritol et d'oxyde d'éthylène/oxyde de propylène (rapport pondéral 80/20, répartition statistique) ayant une teneur en radicaux OH libres de 1,4% et un poids moléculaire moyen d'environ 5 000 g/mole et en outre avec 13 g d'un polyol à base de triméthylolpropane et d'oxyde de propylène ayant une teneur en radicaux OH libres de 11,5% en poids et un poids moléculaire moyen d'environ 450 g par mole. On ajoute comme additifs aux polyols, 0,01 g de dilaurate de dibutylétain comme catalyseur et 1 g d'oxyalkylènepolysiloxane comme agent d'étalement.

On agite le mélange à la température ambiante pendant 10 minutes. On convertit le mélange de réaction ainsi homogénéisé de la même façon que dans les exemples décrits ci-dessus, en couches de couverture durcies, sur lesquelles on exécute les mesures. On obtient ainsi les valeurs de mesure suivantes:

| | |
|---|---|
| – Module E | $8 \pm 1$ N/mm² |
| – Augmentation de turbidité après abrasion | 1,2% |
| – Résistance à la rayure | 12 p |
| – Délai d'apparition de l'embuage | environ 5 min |

Dans ce cas également, les propriétés mécaniques tombent entre les limites déjà indiquées. Le ralentissement de la condensation est également si notable que cette couche de couverture également peut être considérée comme exempte de condensation dans les conditions d'une application pratique de telles couches de revêtement.

La couche de revêtement selon l'invention peut avantageusement être associée à une couche de matière plastique présentant des propriétés d'adhésion et/ou des propriétés d'absorbeur d'énergie comme décrit par exemple dans les publications de brevets français 2 398 606 et européens 0 054 491, 0 132 198 et 0 133 090 pour former une feuille à deux couches utilisable notamment dans les vitrages feuilletés de sécurité.

## Revendications

1. Couche de revêtement en polyuréthane transparent ayant des propriétés d'autocicatrisation pour des vitrages en verre et/ou en matière plastique, formée à partir d'un mélange réactionnel contenant un composant isocyanate plurifonctionnel en particulier trifonctionnel et un composant polyol plurifonctionnel, éventuellement un catalyseur de réaction et d'autres substances auxiliaires, caractérisée en ce que le mélange réactionnel comprend essentiellement 10 à 75% en poids d'un biuret ou isocyanurate du 1,6-hexaméthylènediisocyanate comprenant 15 à 25% en poids de radicaux NCO et ayant un poids moléculaire moyen compris entre 450 et 850 en tant que composant isocyanate et 90 à 25% en poids d'un composant polyol comprenant essentiellement un polyol plurifonctionnel comprenant 0,4 à 17% en poids de radicaux OH et ayant un poids moléculaire moyen compris entre 200 et 15 000, ainsi que des chaînes éthoxy-propoxy comprenant 50 à 90% en poids de radicaux éthoxy-propoxy et éventuellement le catalyseur de réaction et les autres substances auxiliaires.

2. Couche de revêtement suivant la revendication 1, caractérisée en ce que les radicaux éthoxy et propoxy se trouvent en répartition statistique dans les chaînes éthoxy-propoxy du polyol plurifonctionnel.

3. Couche de revêtement suivant la revendication 1 ou 2, caractérisée en ce que le mélange réactionnel contient 25 à 70% en poids d'un polyol difonctionnel comprenant 5 à 17% en poids de radicaux OH, ayant un poids moléculaire moyen compris entre 200 et 600 et comprenant 80% en poids de radicaux éthoxy dans la chaîne éthoxy-propoxy.

4. Couche de revêtement suivant la revendication 1 ou 2, caractérisée en ce que le mélange réactionnel contient 30 à 90% en poids d'un polyol de fonctionnalité supérieure à 2 comprenant 0,4 à 14% en poids de radicaux OH, ayant un poids moléculaire moyen compris entre 500 et 15 000 et comprenant 50 à 90% en poids de radicaux éthoxy dans les chaînes éthoxy-propoxy.

5. Couche de revêtement suivant la revendication 4, caractérisée en ce que le polyol de fonctionnalité supérieure à 2 est formé à partir d'au moins un des composés hydroxylés trifonctionnels choisis parmi le triméthylolpropane et le glycérol.

6. Couche de revêtement suivant la revendication 4, caractérisée en ce que le polyol de fonctionnalité supérieure à 2 est formé à partir d'un composé hydroxylé tétrafonctionnel notamment le pentaérythritol.

7. Couche de revêtement suivant la revendication 5 ou 6, caractérisée en ce qu'environ 80% en poids de radicaux éthoxy et environ 20% en poids de radicaux propoxy se trouvent en répartition statistique dans les chaînes éthoxy-propoxy.

8. Couche de revêtement suivant la revendication 1 ou 2, caractérisée en ce que le mélange réactionnel contient 40 à 70% en poids d'un polyol tétrafonctionnel comprenant 0,7 à 14% en poids de radicaux OH, ayant un poids moléculaire moyen compris entre 500 et 10 000 et comprenant 10 à 80% en poids de radicaux éthoxy dans les chaînes éthoxy-propoxy.

9. Couche de revêtement suivant la revendication 8, caractérisée en ce que le polyol tétrafonctionnel est formé à partir d'éthylènediamine.

10. Couche de revêtement suivant l'une quelconque des revendications 1 à 9, caractérisée en ce que le composant polyol du mélange réactionnel contient en outre jusqu'à 50% en poids d'un polyol trifonctionnel ayant un poids moléculaire moyen compris entre 400 et 1 000 et de préférence entre 400 et 600 et comprenant 8 à 14% en poids et de préférence 10 à 12% en poids de radicaux OH.

11. Couche de revêtement suivant la revendication 10, caractérisée en ce que le polyol trifonctionnel est un polyétherpolyol à base de triméthylolpropane ou de glycérol et d'oxyde de propylène.

12. Couche de revêtement suivant la revendication 10, caractérisée en ce que le polyol trifonctionnel est un lactonepolyesterpolyol à base de
triméthylolpropane ou de glycérol et d'ε-capro-
lactone.

13. Couche de revêtement suivant l'une quelconque des revendications 1 à 12, caractérisée en
ce que le composant polyol du mélange réactionnel contient jusqu'à 15% en poids d'additifs tels
que des esters alcoyliques fluorés ou des oxyalky-
lènepolyxiloxanes comme agents d'écoulement,
des solvants organiques tels que le toluène, le
xylène, l'acétate d'éthyle et/ou l'acétate d'éthylèneglycol, des agents de protection contre la lumière de la famille des amines à empêchement
stérique, ainsi que des absorbants UV tels que des
benzotriazoles substitués.

14. Feuille de matière plastique comprenant au
moins une couche de revêtement selon une des
revendications 1 à 13.

15. Vitrage comprenant une couche de revêtement selon l'une des revendications 1 à 13.

## Patentansprüche

1. Deckschicht aus klar durchsichtigem Poly-
urethan mit Selbstheileigenschaften für Sicht-
scheiben aus Glas oder Kunststoff, die aus einer
eine Isocyanatkomponente aus einem mehrfunktionellen, insbesondere trifunktionellen Polyisocyanat und eine Polyolkomponente aus einem
mehrfunktionellen Polyol, sowie gegebenfalls einen Reaktionskatalysator und weitere Hilfsstoffe
enthaltenden Reaktionsmischung hergestellt ist,
dadurch gekennzeichnet, dass die Reaktionsmischung als Isocyanatkomponente im wesentlichen 10 bis 75 Gew.-% eines Biurets oder Iso-
cyanurats des 1,6-Hexamethylendiisocyanats mit
15 bis 25 Gew.-% NCO-Gruppen und einem
mittleren Molekulargewicht von 450 bis 850, und
als Polyolkomponente im wesentlichen 90 bis 25
Gew.-% eines mehrfunktionellen Polyols mit 0,4
bis 17 Gew.-% OH-Gruppen und einem mittleren
Molekulargewicht von 200 bis 15 000, sowie mit
Ethoxi-Propoxi-Ketten mit 50 bis 90 Gew.-%
Ethoxi-Gruppen in den Ethoxi-Propoxi-Ketten
enthält, wobei die Polyolkomponente gegebenenfalls den Reaktionskatalysator und die weiteren Hilfsstoffe enthält.

2. Deckschicht nach Anspruch 1, dadurch gekennzeichnet, dass die Ethoxi- und Propoxi-
Gruppen in den Ethoxi-Propoxi-Ketten des mehrfunktionellen Polyols in statistischer Verteilung
vorliegen.

3. Deckschicht nach Anspruch 1 oder 2, dadurch gekennzeichnet, dass die Reaktionsmischung 25 bis 70 Gew.-% eines difunktionellen
Polyols mit 5 bis 17 Gew.-% OH-Gruppen, einem
mittleren Molekulargewicht von 200 bis 600 und 80 Gew.-% Ethoxi-Gruppen in der Ethoxi-Propoxi-Kette enthält.

4. Deckschicht nach Anspruch 1 oder 2, dadurch gekennzeichnet, dass die Reaktionsmischung 30 bis 90 Gew.-% eines tri- oder anderen
mehrfunktionellen Polyols mit 0,4 bis 14 Gew.-%
OH-Gruppen, einem mittleren Molekulargewicht
von 500 bis 15 000 und 50 bis 90 Gew.-%
Ethoxi-Gruppen in den Ethoxi-Propoxi-Ketten
enthält.

5. Deckschicht nach Anspruch 4, dadurch gekennzeichnet, dass das tri- oder andere mehrfunktionelle Polyol auf wenigstens einer der trifunktionellen Hydroxylverbindungen Trimethylolpropan oder Glycerin aufgebaut ist.

6. Deckschicht nach Anspruch 4, dadurch gekennzeichnet, dass das tri- oder andere mehrfunktionelle Polyol auf einer tetrafunktionellen
Hydroxylverbindung, insbesondere auf Pentaerythrit aufgebaut ist.

7. Deckschicht nach Anspruch 5 oder 6, dadurch gekennzeichnet, dass ca. 80 Gew.-% Ethoxi-Gruppen und ca. 20 Gew.-% Propoxi-Gruppen in den Ethoxi-Propoxi-Ketten in statistischer
Verteilung vorliegen.

8. Deckschicht nach Anspruch 1 oder 2, dadurch gekennzeichnet, dass die Reaktionsmischung 40 bis 70 Gew.-% eines tetrafunktionellen
Polyols mit 0,7 bis 14 Gew.-% OH-Gruppen, einem mittleren Molekulargewicht von 500 bis
10 000 und 10 bis 80 Gew.-% Ethoxi-Gruppen in
den Ethoxi-Propoxi-Ketten enthält.

9. Deckschicht nach Anspruch 8, dadurch gekennzeichnet, dass das tetrafunktionelle Polyol
auf Ethylendiamin aufgebaut ist.

10. Deckschicht nach einem der Ansprüche 1
bis 9, dadurch gekennzeichnet, dass die Polyolkomponente der Reaktionsmischung zusätzlich
bis zu 50 Gew.-% eines trifunktionellen Polyols
mit einem mittleren Molekulargewicht von 400
bis 1000, vorzugsweise von 400 bis 600, und 8
bis 14 Gew.-%, vorzugsweise 10 bis 12 Gew.-%
OH-Gruppen enthält.

11. Deckschicht nach Anspruch 10, dadurch
gekennzeichnet, dass das trifunktionelle Polyol
ein Polyetherpolyol auf der Basis von Trimethylolpropan oder Glycerin und Propylenoxid ist.

12. Deckschicht nach Anspruch 10, dadurch
gekennzeichnet, dass das trifunktionelle Polyol
ein Lactonpolyesterpolyol auf der Basis von Trimethylolpropan oder Glycerin und ε-Caprolacton
ist.

13. Deckschicht nach einem oder Ansprüche 1
bis 12, dadurch gekennzeichnet, dass die Polyolkomponente der Reaktionsmischung bis zu 15
Gew.-% Zusatzstoffe wie fluorierte Alkylester
oder Polyalkoxypolysiloxane als Verlaufmittel,
organische Lösungsmittel wie Toluol, Xylol,
Ethylacetat und/oder Ethylglykolacetat, Lichtschutzmittel aus der Familie der sterisch gehinderten Amine, sowie UV-Absorber wie substituierte Benzotriazole enthält.

14. Folie aus Kunststoff mit wenigstens einer
Deckschicht nach einem der Ansprüche 1 bis 13.

15. Verglasung mit einer Deckschicht nach einem der Ansprüche 1 bis 13.

**Claims**

1. A coating layer of transparent polyurethane having self-healing properties for panes of glass and/or plastics material, formed from a reaction mixture containing a polyfunctional isocyanate component, in particular a trifunctionel component, and a polyfunctional polyol component and optionally a reaction catalyst and other auxiliary substances, characterised in that the reaction mixture comprises essentially 10 to 75% by weight of a biuret or isocyanurate of 1,6-hexamethylenediisocyanate comprising 15 to 25% by weight of NCO radicals and having an average molecular weight from 450 to 850 as the isocyanate component, and 90% to 25% by weight of a polyol component comprising essentially a polyfunctional polyol comprising 0.4 to 17% by weight of OH radicals and having an average molecular weight from 200 to 15 000, and ethoxy-propoxy chains comprising from 50 to 90% by weight of ethoxy radicals and 10 to 50% by weight of propoxy radicals in the ethoxy-propoxy chains, and optionally a reaction catalyst and other auxiliary substances.

2. A coating layer according to claim 1, characterised in that the ethoxy and propoxy radicals are statistically distributed in the ethoxy-propoxy chains of the polyfunctional polyol.

3. A coating layer according to claim 1 or 2, characterised in that the reaction mixture contains 25 to 70% by weight of a difunctional polyol comprising 5 to 17% by weight of OH radicals, having an average molecular weight from 200 to 600 and comprising 80% by weight of ethoxy radicals in the ethoxy-propoxy chain.

4. A coating layer according to claim 1 or 2, characterised in that reaction mixture contains 30 to 90% by weight of a polyol of functionality greater than 2 comprising 0.4 to 14% by weight of OH radicals, having an average molecular weight from 500 to 15 000 and comprising 50 to 90% by weight of ethoxy radicals in the ethoxy-propoxy chains.

5. A coating layer according to claim 4, characterised in that the polyol of functionality greater than 2 is formed from at least one trifunctional hydroxy compound selected from trimethylolpropane and glycerol.

6. A coating layer according to claim 4, characterised in that the polyol of functionality greater than 2 is formed from a tetrafunctional hydroxy compound, notably pentaerythritol.

7. A coating layer according to claim 5 or 6, characterised in that about 80% by weight of ethoxy radicals and about 20% by weight of propoxy radicals are statistically distributed in the ethoxy-propoxy chains.

8. A coating layer according to claim 1 or 2, characterised in that the reaction mixture contains 40 to 70% by weight of a tetrafunctional polyol comprising 0.7 to 14% by weight of OH radicals, having an average molecular weight from 500 to 10 000 and comprising 10 to 80% by weight of ethoxy radicals in the ethoxy-propoxy chains.

9. A coating layer according to claim 8, characterised in that the tetrafunctional polyol is formed from ethylenediamine.

10. A coating layer according to any one of claims 1 to 9, characterised in that the polyol component of the reaction mixture further contains up to 50% by weight of a trifunctional polyol having an average molecular weight from 400 to 1000, and comprising 8 to 14% by weight of OH radicals, preferably 10 to 12% by weight of OH radicals.

11. A coating layer according to claim 10, characterised in that the trifunctional polyol is a polyetherpolyol based on trimethylolpropane or glycerol and propylene oxide.

12. A coating layer according to claim 10, characterised in that the trifunctional polyol is a lactonepolyesterpolyol based on trimethylolpropane or glycerol and ε-caprolactone.

13. A coating layer according to any one of claims 1 to 12, characterised in that the polyol component of the reaction mixture contains up to 15% by weight of additives such as fluoroalkyl esters or oxyalkylenepolysiloxanes as casting aids, organic solvents such as toluene, xylene, ethyl acetate and/or ethyleneglycol acetate, agents for protection from light selected from sterically hindered amines, and U.V. absorbents such as substituted benztriazoles.

14. A sheet of plastics material comprising at least one coating layer according to any one of claims 1 to 13.

15. A window pane comprising a coating layer according to any one of claims 1 to 13.